## Europäisches Patentamt

## European Patent Office

## Office européen des brevets

(11) Veröffentlichungsnummer: **0 165 488**
**B1**

(12) **EUROPÄISCHE PATENTSCHRIFT**

(45) Veröffentlichungstag der Patentschrift: **11.04.90**

(51) Int. Cl.⁵: **H 04 N 7/133**

(21) Anmeldenummer: **85106162.2**

(22) Anmeldetag: **20.05.85**

(54) Verfahren zur Übertragung von Fernsehbildern.

(30) Priorität: **21.05.84 DE 3418858**

(43) Veröffentlichungstag der Anmeldung:
**27.12.85 Patentblatt 85/52**

(45) Bekanntmachung des Hinweises auf die
Patenterteilung:
**11.04.90 Patentblatt 90/15**

(84) Benannte Vertragsstaaten:
**AT BE CH DE FR GB IT LI NL SE**

(56) Entgegenhaltungen:
EP-A-0 107 426
FR-A-2 329 124
IEEE INTERNATIONAL CONFERENCE ON
ACOUSTICS, SPEECH AND SIGNAL
PROCESSING (ICASSP), Band 2, 3.-5. Mai 1982,
Paris, FR, Seiten 1203-1206; H.K. NAGPAL et al.:
"Memory architecture of a video-rate image
convolver"

(73) Patentinhaber: **Siemens Aktiengesellschaft
Wittelsbacherplatz 2
D-8000 München 2 (DE)**

(72) Erfinder: **Schlichte, Max, Dr.-Ing.
Maxhofstrasse 302
D-8000 München 71 (DE)**

(56) References cited:
INTERNATIONAL CONFERENCE ON
COMMUNICATIONS/CONFERENCE RECORD
(ICC'80), Band 2, 8.-12. Juni 1980, Seattle, US;
KING NGI NGAN et al.: "Lowpass filtering in the
cosine transform domain"

IEEE INTERNATIONAL CONFERENCE ON
ACOUSTICS, SPEECH AND SIGNAL
PROCESSING (ICASSP), Band 3, 14.-16. April
1983, Seiten 1212-1215, Boston, US; H.C. REEVE
III et al.: "Reduction of blocking effect in image
coding"

Courier Press, Leamington Spa, England.

## EP 0 165 488 B1

**Beschreibung**

Die Erfindung betrifft ein Verfahren zur Übertragung von digitalisierten Fernsehbildern, bei denen die Signalwerte von Teilbildern überlappend in Spektralwerte transformiert werden, deren Koeffizienten übertragen werden und aus denen empfangsseitig durch Rücktransformation wiederum die Signalwerte ermittelt werden.

Für die Codierung von Bildsignalen stehen hauptsächlich zwei Prinzipien zur Auswahl, das im Zeitbereich arbeitende Prädiktionsverfahren und das im Spektralbereich operierende Transformations-verfahren. Diese Verfahren sind in dem Aufsatz "Picture Coding: A Review" in Proceedings of the IEEE, Vol. 68, No. 3, March 1980, S. 366—406 beschrieben. Beide Verfahren machen von der starken Korrelation benachbarter Bildpunkte Gebrach, in dem sie eine Codierung anstreben, bei der die zur Darstellung eines Bildelements verwendete Informaton auf den tatsächlichen Informationsgehalt reduziert wird. Diese Redundanzreduktion wird durch eine Irrelevanzreduktion ergänzt.

Bei Transformationsverfahren werden die Bildsignale von Teilbildern in Spektralwerte umgesetzt, deren Koeffizienten übertragen und auf der Empfangsseite durch Rücktransformation wieder in die entsprechenden Signalwerte (Luminanz und Chrominanz) umgesetzt werden. Fehler, die durch die Verfälschung der Spektralwerte entstehen, werden kaum wahrgenommen, da sich die Energie der Störungen auf das gesamte Teilbild, also auf alle Spektralwerte, verteilt. Da ein Teil der Spektralwerte nur einen kleinen Energieanteil enthält, ist eine weitere Daten-reduktion durch geeignete Quantisierung möglich.

Da es technologisch noch nicht möglich ist, ganze Fernsehbilder geschlossen zu transformieren, begnügt man sich stets mit der Übertragung von Teilbildern. Diese Teilbilder können eindimensional sein, beispielsweise also die Luminanzsignale eines Teils einer Fernsehzeile umfassen, zweidimensional sein, also die benachbarten Signalwerte von vorhergehenden Fernsehzeilen oder die entsprechenden Signalwerte der selben Bildpunkte des vorangegangenen Fernsehbildes berücksichtigen, oder, bei entsprechendem Aufwand dreidimensional sein und zweidimensionale Teilbilder und das vorangegangene Fernsehteilbild berücksichtigen.

Aus der Zeitschrift Proceedings of the IEEE, Vol. 66, No. 1, January 1978, S. 51—83 ist die Verwendung von Fensterfunktionen bei der Anwendung der Fourier-Transformation bekannt.

Die Verwendung von Fensterfunktionen bei der Realisierung von Filtern ist ebenfalls bekannt.

Die Spline-Funktionen werden ausführlich in dem Buch "The Theory of Splines and Their Applications" von Ahlberg, Academic Press, New York, London beschrieben.

Ihre Anwendung bei der Filterrealisation ist aus dem Aufsatz "Zur Spline-Interpolation bei Digitalfiltern" in Frequenz 38 (1984), S. 44—49 beschrieben.

Aus der Offenlegungsschrift DE—A—33 04 787 ist bekannt, durch teilweise Überlappung eine blockübergreifende Korrelation mitzuerfassen.

Bei diesen Verfahren ist jedoch die Datenreduktion bei Fernsehbildern mit großen höherfrequenten Spektralwerten gering.

Aus der europäischen Patentanmeldung EP—A—0 107 426 ist ein Transformationsverfahren bekannt, bei dem die Helligkeitsunterschiede an den Grenzen von Teilbildern mitberücksichtigt werden. Hierdurch ist es möglich, gemeinsame Mittelwerte (Gleichspannungsanteil) für mehrere Teilbilder zu übertragen und dadurch zu einer Datenreduktion zu gelangen.

In "International Conference on Communications", Conference Record (ICC' 80), Band 2, 8.—12. Juli 1980, pages 31.71—31.75, Seattle, US; KING NKG NGAN et al.: "Lowpass filtering in the cosine transform domain" wird die ein- und mehrdimensionale Filterung im Spektralbereich beschrieben. Die Signalwerte werden mittels der DC—Transformation in Spectralwerte umgesetzt, weiterverarbeitet, rückumgesetzt und mittels einer überlappenden linearen Transformation wiedergewonnen.

Aufgabe der Erfindung ist es, ein verbessertes Transformations-verfahren zur Übertragung digitaler Fernsehbilder anzugeben.

Die Aufgabe sind durch die im Patentanspruch 1 angegebenen Merkmale gelöst.

Es ist vorteilhaft, daß als Zeitfensterfunktion Spline-Funktionen der Ordnung $m \geq 3$ vorgesehen sind.

Bei diesem Verfahren wird eine möglichst rechtechförmige "Übertragungsfunktion" für die Koeffizienten (mit geringer Leakage zu benachbarten Koeffizienten) festgelegt, wobei der sogenannte picket-fence-Effekt durch geeignete Bandbreite klein bleiben soll. Die hierzu korrespondierende Zeitfensterfunktion — diese entspricht der Rücktransformierten der Übertragungsfunktion — wird aus Aufwandsgründen möglichst kurz sein und soll bei der Übertragung bei einem vorgegebenen Vorschub die Zeitachse konstant abdecken. Hierzu eignen sich vorteilhaft Spline-Funktionen. Durch die verwendete Transformation werden nur wenige Spektralwerte erzeugt und übertragen. Die zur Rücktransformation notwendigen Spektralwerte werden durch Interpolation wiedergewonnen. Die Datenrate wird durch Quantisierung der Spektralwerte weiter reduziert.

Es ist zweckmäßig, daß die Transformation von Signalwerten in Spektralwerte durch die diskrete Fourier-Transformation erfolgt.

Die diskrete Fourier-Transformation hat günstige Transformationseigenschaften und ist einfach zu realisieren. Es werden selbstverständlich nur wieder die (oft als Basis-Vektoren bezeichneten) Koeffizienten

2

$m_{hl}$ verwendet, die bei jeweils einem kosntanten h für jeweils N Koeffizienten eine ganzzahlige Anzahl von Sinusschwingungsperioden umfassen.

Es ist vorteilhaft, daß jeweils die innerhalb der Teilbilder dieselbe Position innehabenden bewerteten Signalwerte zueinander zur Ermittlung von Summensignalwerten addiert werden und daß jeweils N Summensignalwerte transformiert werden.

Durch Ausnützung der Periodizität der Transformation wird der schaltungsmäßige Aufwand stark verringert.

Zur Erzielung einer verbesserten Bildqualität ist es zweckmäßig, daß mehrdimensionale Teilbilder übertragen werden.

Durch Verwendung von mehrdimensionalen Teilbildern kann die Datenrate bei gleichbleibender Bildqualität weiter reduziert werden. Mehr als dreidimensionale Teilbilder sind jedoch im allgemeinen nicht zweckmäßig. Eine entsprechende Transformation erfolgt durch zeitlich nacheinander ausgeführte eindimensionale Transformation. Weitere vorteilhafte Ausbildungen der Erfindung sind in den übrigen Unteransprüchen angegeben.

Ein Ausführungsbeispiel mit mehreren Variationen des erfindungsgemäßen Verfahrens wird anhand von Figuren näher erläutert.

Es zeigen:

Fig. 1 ein eindimensionales Fernsehbild,
Fig. 2 ein Prinzipschaltbild einer Übertragungseinrichtung,
Fig. 3 eine Spline-Zeitfunktion,
Fig. 4 die dazugehörige Übertragungsfunktion,
Fig. 5 "Übertragungsfunktionen" der Transformation,
Fig. 6 die Elemente der Transformationsmatrix und
Fig. 7 ein vorteilhaftes Ausführungsbeispiel.

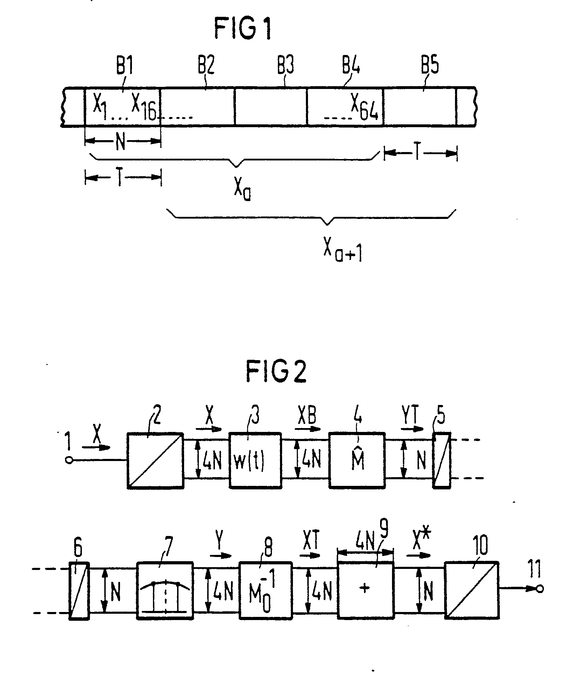

In Fig. 1 sind 5 Teilbilder B1 bis B5 als Ausschnitt einer Fernsehzeile dargestellt. Jedes Teilbild enthält N = 16 Signalwerte, die beispielsweise den Luminanwerten von Bildpunkten entsprechen. Zunächst werden die vier Teilbilder B1 bis B4, gekennzeichnet durch einen Vektor $X_a$, verarbeitet, dann werden die Teilbilder B2 bis B5, gekennzeichnet durch einen Vektor $X_{a+1}$, verarbeitet. Der Vorschub T beinhaltet stets ein Teilbild. .

Die Verarbeitung wird anhand des Prinzipschaltbildes Fig. 2 näher erläutert. Die am Eingang 1 eines Serien-Parallel-Umsetzers 2 anliegenden Signalwerte X werden zunächst in parallele Form mit einer Breite von 4N Signalwörtern umgewandelt. Dann erfolgt eine gleichzeitige Bewertung aller 4N Signalwerte mittels einer Zeitfensterfunktion w(t) in einem Zeitfensterfunktionsmultiplizierer 3. Anschließend erfolgt die Serien-Parallel-Umsetzung eines neuen Teilbildes B5. Dieses und die drei letzten Teilbilder B2 bis B4 werden zusammen mit derselben Zeitfensterfunktion w(t). Die wieder 4N umfassenden bewerteten Signalwerte XB werden in der Transformationseinrichtung 4 in Spektralwerte YT umgesetzt. Es werden nicht sämtliche möglichen 4N, sondern nur N ausgewählte Spektralwerte YT übertragen. Durch die Transformation ergibt sich eine Datenreduktion durch Aufbrechen der statistrischen Bindungen zwischen den Bildsignalen. Die Spektralwerte werden einer Codiereinrichtung 5 zugeführt, die eine Quantisierung und Codierung durchführt. Hierdurch ergibt sich eine weitere Datenreduktion, die jedoch nicht Teil der vorliegenden Erfindung ist. Auf der Empfangsseite erfolgt zunächst eine Decodierung durch eine Decodiereinrichtung 6. Anschließend werden die nicht übertragenen Spektralwerte in einer Interpolationseinrichtung 7 wiedergewonnen, so daß Y = 4N Spektralwerte zur Verfügung stehen. Diese werden einer Rücktransformationseinrichtung 8 zugeführt, die an ihrem Ausgang wiederum 4N entsprechend der Zeitfunktion w(t) bewertete Signalwerte XT ergibt die weitgehend den bewerteten Signalwerten XB entsprechen. In einer Additionseinrichtung 9 werden jeweils die Signalwerte der drei ersten rücktransformierten Teilbilder B2, B3 und B4 zu den entsprechenden bereits rücktransformierten Signalwerten derselben Teilbilder (B)

$$XT_a(B2) + XT_{a+1}(B2), XTa(B3) + XT_{a+1}(B3), \ldots, O + XT_{a+1}(B5)$$

a — übertragener Datenblock

addiert. Jedes Teilbild setzt sich somit aus Signalwerten zusammen, die durch Addition von jeweils vier durch Rücktransformation gewonnenen Signalwerten XT besteht. Jeweils nach der Übertragung eines Blockes von Spektralwerten liegt am Ausgang der Additionseinrichtung 9 ein komplettes Teilbild mit den weiterzuverwendenden Bildsignalwerten X* an, das durch einen Parallel-Serien-Umsetzer 10 an dessen Ausgang 11 in serieller Form abgegeben wird.

Hier soll nur die Übertragung der Luminanzwerte betrachtet werden, für Chrominanzwerte erfolgt die Codierung entsprechend. Es soll hier daraufhin gewiesen werden, daß es möglich ist, bei der Rücktransformation einige Spektralwerte Y wegzulassen und auch bereits auf die Übertragung einiger Spektralwerte YT zu verzichten.

Die Zeitfensterfunktion w(t) soll aus Aufwandsgründen möglichst kurz sein und eine Überlappung mit einem Vorschubsintervall T, das einem Teilbild B entspricht, die Zeitachse konstant abdecken.

$$(1) \qquad w(t)* \sum_{v=-\infty}^{\infty} \delta(t - vT) = 1 \qquad\qquad \delta - \text{Dirac} - \text{Impuls}$$

Die Addition aller Zeitfensterfunktionen ergibt somit ständig den Wert 1. Als Zeitfensterfunktion w(t) sind Spline-Funktionen beliebiger Ordnung m geeignet, die durch m-malige Faltung eines definierten Rechteckfesters $w_{OT}$ mit sich selbst entstehen und die Länge (m + 1)T haben. Die zugeordneten Übertragungsfunktionen

$$(2) \qquad w_m(f) = Si^{m+1}(\pi fT)$$

weisen eine mit dem Exponenten (m + 1) steigende Dämpfung im Sperrbereich auf (geringe leakage). Da der Durchlaßbereich jedoch mit washsender Ordnung sehr schmal wird, ist eine lückenlose Abdeckung des Spektrums bei großen Exponenten nicht mehr gewährleistet. Einen günstigen Kompromiß erhält man durch Fensterfunktionen, die durch zwei- oder mehrmaliger Überlagerung von Spline-Grundfunktionen entstehen. Eine solche heterogene Spline-Funktion

$$(3) \qquad w_{3/2}(t) = \begin{cases} 1 \quad -\dfrac{5}{2}\tau^2 + \dfrac{3}{2}\tau^3 & \text{für:} \quad 0 \leq \tau \leq 1 \\[2mm] -\dfrac{1}{2}(\tau - 1) + (\tau - 1)^2 - \dfrac{1}{2}(\tau - 1)^3 & 1 \leq \tau \leq 2 \\[2mm] 0 & \tau \geq 2 \end{cases}$$

$$\text{mit } \tau = |t/T|$$

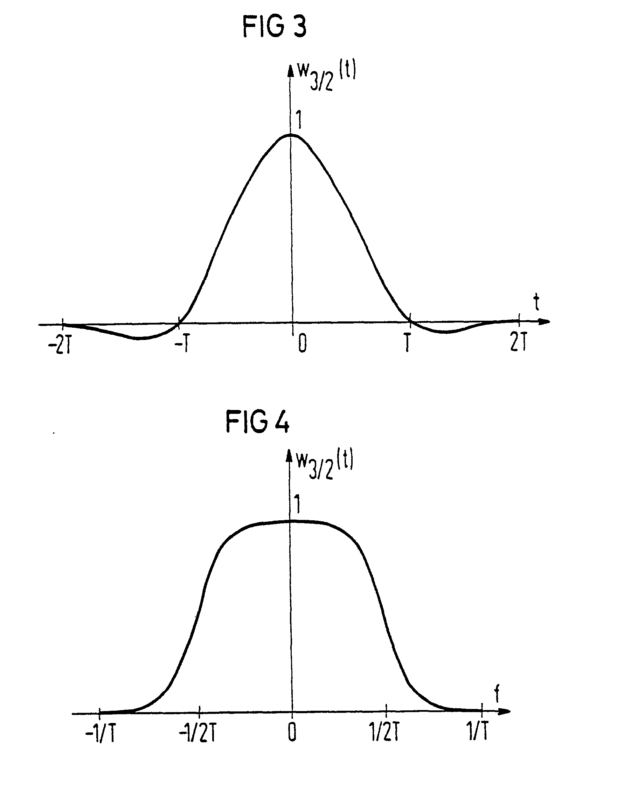

ist in Fig. 3 dargestellt und in Fig. 4 die zugehörige Übertragungsfunktion:

$$(4) \qquad w_{3/2}(f) = 3\,Si^4(\pi fT) - 2\cos(\pi fT)\cdot si^3(\pi fT)$$

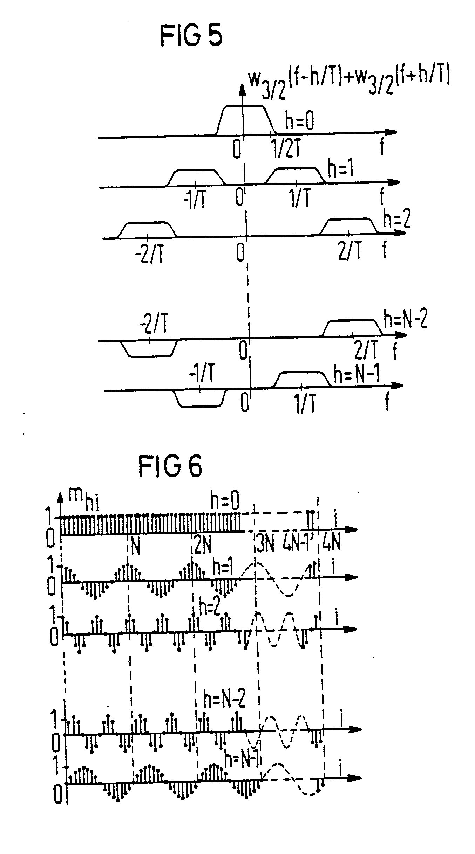

Mit Hilfe des Verschiebungssatzes lassen sich damit die Basisvektoren der Transformation angeben, wie in Fig. 5 dargestellt ist. Die gewählte Aufteilung des Frequenzbandes führt auf eine reelle Fouriertransformation mit der Rechteckmatrix

$$(5) \qquad \hat{M} = \sqrt{\dfrac{1}{N}}\,[m_{hi}] \quad m_{hi} = \begin{cases} \cos 2\pi\, hi/N & \text{für } h = 0, 1 \ldots N/2 \\ -\sin 2\pi\, hi/N & \text{für } h = N/2 + 1 \ldots N - 1 \end{cases}$$

$$i = 0,1, \ldots 4N - 1$$

$$(N = \text{geradzahlig}).$$

In Fig. 6 sind die dazugehörigen Matrix-Elemente $m_{hi}$ dargestellt, die jeweils mit N periodisch sind. Die Transformationsmatrix besteht entsprechend aus vier regulären N-reihigen Matrixen M:

$$(6) \qquad \hat{M} = |\,M \mid M \mid M \mid M\,|$$

Die Transformation kann mit Hilfe eines LSI-Bausteins durchgeführt werden; ebenso können andere bekannte Schaltungen eingesetzt werden.

Nach der Decodierung müssen aus den N durch Transformation gewonnenen Spektralwerten YT wiederum 4N Spektralwerte Yermittelt werden, aus denen durch Rücktransformation durch die volle quadratische DFT-Matrix $M_0^{-1}$ wiederum die Signalwerte X* ermittelt werden. Im vorliegenden Beispiel wurde jeweils nur die nullte, vierte, achte, zwölfte usw. Zeile transformationsmatrix $M_0$ zur Umsetzung der Signalwerte in Spektralwerte verwendet, entsprechend der vier Teilbilder umfassenden Zeitfensterfunktion (umfaßt die Zeitfensterfunktion 5 Teilbilder, wird jede fünfte Zeile der entsprechenden Matrix $M_0$ genutzt. Die fehlenden Spektralwerte werden empfangsseitig durch Interpolation zwischen den übertragenen Spektralwerten YT gewonnen. Bereits eine lineare Interpolation bringt günstige Ergebnisse. Die Rücktransformation erfolgt mit Hilfe der inversion DFT-Matrix $M_0^{-1}$ mit:

4

$$(7) \qquad M_0 = \sqrt{\frac{1}{4N}} \; [m_{ki}] \quad m_{ki} = \begin{cases} \dfrac{\cos 2\pi \, ki}{4N} & \text{für } k = 0,1,\ldots 2N \\[2em] \dfrac{-\sin 2\pi \, ki}{4N} & \text{für } k = 2N + 1 \ldots 4N - 1 \end{cases}$$

$$i = 0,1 \ldots 4N - 1$$

Die rücktransformierten Signalwerte XT unterscheiden sich aufgrund von Quantisierungs- und Interpolationsfehlern von den mit der Zeitfensterfunktion bewerteten Signalwerten XB. Bei der Übertragung und bei der Rücktransformation können sehr kleine Spektralwerte unberücksichtigt bleiben. Ebenso ist es denkbar, die höherwertigen Spektralwerte, gewissermaßen die hochfrequenten Anteile, unberücksichtigt zu lassen.

Die rücktransformierten Signalwerte XT werden durch gleitende Addition zu den ursprünglichen Bildsignalwerden X* zusammengesetzt. Dies geschieht in der Additionseinrichtung 9, die beispielsweise ein 4N langes Register mit der für die Signalwerte erforderlichen Wortbreite enthält. Es werden jeweils die rücktransformierten Signalwerte XT der ersten drei Teilbinder, z.B. B2 bis B4, zu den letzten drei Teilbildern, dies sind ebenfalls B2 bis B4, des vorangegangenen Transformationsblockes addiert und die rücktransformierten Signalwerte des letzten Teilbildes B5 neu eingespeichert. Durch die fortlaufende Addition ergeben sich entsprechend der vorausgesetzten Zeitfensterfunktion die Bildsignalwerte X*, die sich von den ursprünglichen Signalwerten X aufgrund der getroffenen Datenreduktion geringfügig unterscheiden. Am Ausgang der Additionseinrichtung liegt jeweils ein komplettes Teilbild mit N signalwerten an, das durch den Parallel-Serien-Umsetzer 10 in serielle Form umgesetzt wird.

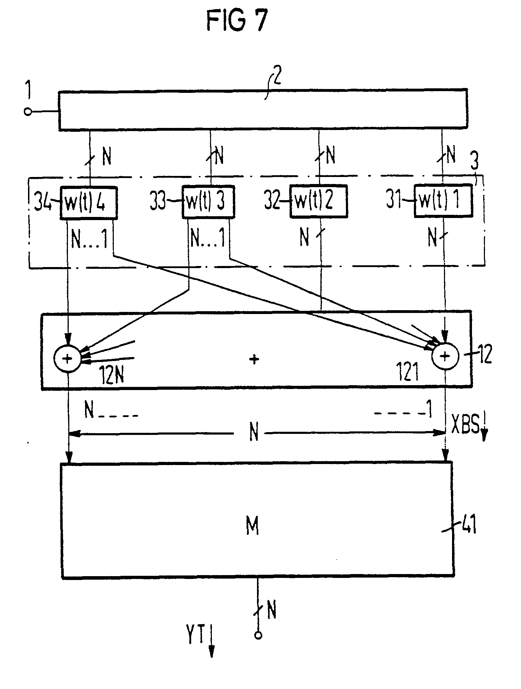

Eine vereinfachte Übertragungseinrichtung ist in Fig. 7 darstellt. Sie enthält wieder den Serien-Parallel-Umsetzer 2 und den Zeitfunktionsmultiplizierer 3, der hier ausführlicher dargestellt ist. Er enthält vier Teilfunktionsmultiplizierer 31 bis 34, in denen jeweils ein Abschnitt w(t)1 bis w(t)4 der Zeitfensterfunktion nach Fig. 3, beispielsweise zwischen T und 2T realisiert ist.

Die entsprechenden Signalwerte jedes Teilbildes werden in einer weiteren Additionseinrichtung 12 zusammengefaßt, beispielsweise alle ersten Signalwerte in einem ersten Addierer 121, alle Nten Signalwerte in einem Addierer 12N usw., so daß am Ausgang Summensignalwerte XBS vorhanden sind, von denen jeder Wert in diesem Beispiel die Summe von 4 entsprechenden Signalwerten von 4 aufeinanderfolgenden Teilbildern enthält, die alle entsprechend der Zeitfensterfunktion w(t) bewertet wurden. Die Transformation kann jetzt mit Hilfe der Matrix M erfolgen, die N Spalten und N Zeilen aufweist. Die modifizierte Transformationseinrichtung 41 verfügt entsprechend auch nur über N-Eingänge.

Eine weitere Verbesserung der Datenreduktion wird durch die Übertragung mehrdimensionaler, üblicherweise höchstens dreidimensionaler Teilbilder, erzielt. Bei einer entsprechenden Übertragungseinrichtung wird die Bewertung mittels einer Zeitfensterfunktion und Transformation zunächst in einer Richtung durchgeführt, dann erfolgt ein entsprechendes Vorgehen in der zweiten und in jeder weiteren Richtung.

Bei diesem Übertragungsverfahren werden durch Quantisierung oder Interpolation bedingte Ungenauigkeiten vom Auge kaum wahrenommen. Ebenso erweist sich dieses Verfahren als unempfindlich gegenüber Störungen der Spektralwerte auf dem Übertragungsweg.

**Patentansprüche**

1. Verfahren zur Übertragung von digitalisierten Fernsehbildern, bei denen die Signalwerte (X) von Teilbildern (B) überlappend in Spektralwerte (YT) transformiert werden, deren Koeffizienten ($m_{hi}$) übertragen werden und aus denen empfangsseitig durch Rücktransformation wiederum die Signalwerte (X) ermittelt werden, dadurch gekennzeichnet, daß sendeseitig durch eine Zeitfensterfunktion (wt) die Signalwerte (X = X1 bis X64) mehrerer ganzer Teilbilder (B1 bis B4) bewertet werden, daß als Zeitfensterfunktion eines Spline-Funktion ($w_{3/2}$) verwendet wird, daß jeweils die bewerteten Signalwerte der Teilbilder (B1 bis B4) mittels einer modifizierten Fourier-Transformation, deren Koeffizienten eine ganzzahlige Anzahl von Sinusschwingungsperioden aufweisen, in Spektralwerte (YT) umgesetzt werden, daß jeweils entsprechend der Anzahl (N) der Signalwerte eines Teilbildes (B1, B2, B3, . . .) maximal dieselbe Anzahl (N) von Spektralwerten (YT) übertragen wird, daß sendeseitig anschließend um ein Teilbild (B1) verschoben die Signalwerte der folgenden Teilbinder (B2 bis B5) in derselben Weise verarbeitet und übertragen werden, daß empfangsseitig nicht übertragene Spektralwerte durch Interpolation der übertragenen Spektralwerte (YT) ermittelt werden, daß anschließend eine Rücktransformation aller Spektralwerte (Y) der jeweils übertragenden Teilbilder (B1 bis B4) erfolgt und daß die weiter zu verwendenden Bildsignalwerte (X*) durch Addition der durch Rücktransformation gewonnenen bewerteten Signalwerte (XT) zu den — entsprechenden der überlappenden Verarbeitung auf der Sendeseite — bereits übertragenden bewerteten vorhergehenden Signalwerten (XT) ermittelt werden.

5

2. Verfahren nach A1, dadurch gekennzeichnet, daß als Zeitfensterfunktion Spline-Funktionen der Ordnung m ≧ 3 vorgesehen sind.

3. Verfahren nach A1 oder A2, dadurch gekennzeichnet, daß die Transformation von Signalwerten (X) in Spektralwerte (YT) durch die diskrete Fourier-Transformation (DFT) erfolgt.

4. Verfahren nach einem der vorhergehenden Ansprüche, dadurch gekennzeichnet, daß jeweils die innerhalb der (m + 1) Teilbinder (B1 bis B4) dieselbe Position innehabenden bewerteten Signalwerte (XB) zueinander zur Ermittlung von Summensignalwerten (XBS) addiert werden und daß jeweils N Summensignalwerte (XBS) transformiert werden.

5. Verfahren nach einem der vorhergehenden Ansprüche, dadurch gekennzeichnet, daß eine heterogene Spline-Funktion der Ordnung m = 3 als Zeitfensterfunktion (w(t)), verwendet wird.

6. Verfahren nach einem der Ansprüche 1 bis 5, dadurch gekennzeichnet, daß eindimensionale Teilbinder (B) mit jeweils 8 oder 16 Signalwerten übertragen werden.

7. Verfahren nach einem der vorhergehenden Ansprüche 1—2, dadurch gekennzeichnet, daß mehrdimensionale Teilbilder übertragen werden.

8. Verfahren nach einem der vorhergehenden Ansprüche, dadurch gekennzeichnet, daß Chrominanzsignale und Luminanzsignale getrennt verarbeitet werden.

**Revendications**

1. Procédé pour transmettre des images de télévision numérisées, dans lesquelles les valeurs (X) des signaux d'images partielles (B) sont transformées, en chevauchement, en des valeurs spectrales (YT), dont les coefficients ($m_{hl}$) sont transmis et à partir desquelles les valeurs (X) des signaux sont à nouveau déterminées côté réception, au moyen d'une transformation inverse, caractérisé par le fait que, côté émission, les valeurs de signaux (X = X1 à X64) de plusieurs images partielles complète (B1 à B4) sont pondérées au moyen d'une fonction de fenêtre temporelle (wt), qu'on utilise comme fonction de fenêtre temporelle une fonction spline (fonction pistolet ($w_{3/2}$), que les valeurs pondérées des signaux des images partielles (B1 à B4) sont converties respectivement au moyen d'une transformation de Fourier modifiée, dont les coefficients possèdent un nombre entier de périodes d'oscillations sinusoïdales, en des valeurs spectrales (YT), que, respectivement en fonction du nombre N des valeurs des signaux d'une image partielle (B1, B2, B3, . . .), au maximum le même nombre N de valeurs spectrales (YT) est transmis, que, côté émission, les valeurs des signaux des images partielles suivantes (B2 à B5) sont traitées et transmises ensuite en étant décalées d'une image partielle (B1), que côté réception, des valeurs spectrales non transmises sont déterminées par interpolation des valeurs spectrales transmises (Y2), qu'ensuite une transformation inverse de toutes les valeurs spectrales (Y) des images partielles (B1 à B4) respectivement transmises est exécutée et que les valeurs (X*), devant être utilisées ultérieurement, des signaux des images sont déterminées par addition des valeurs pondérées (XT) des signaux, obtenues au moyen de la transformation inverse, en des valeurs précédentes pondérées (XT) des signaux, déjà transmises -conformément au traitement avec chevauchement exécuté sur le côté émission.

2. Procédé suivant la revendication 1, caractérisé par le fait qu'il est prévu comme fonction de fenêtre temporelle, des focntions pistolet d'ordre m ≧ 3.

3. Procédé suivant la revendication 1 ou 2, caractérisé par le fait que la transformation de valeurs (X) des signaux en des valeurs spectrales (YT) s'effectue au moyen de la transformation de Fourier discrète (DFT).

4. Procédé suivant l'une des revendications précédentes, caractérisé par le fait que respectivement les valeurs pondérées (XB) des signaux, qui possèdent la même position à l'intérieur des (m + 1) images partielles (B1 à B4), sont additionnées les unes aux autres pour la détermination des valeurs sommes (XBS) des signaux et que respectivement N valeurs sommes (XBS) des signaux sont transformées.

5. Procédé suivant l'une des revendications précédentes, caractérisé par le fait qu'on utilise une fonction pistolet hétérogène d'ordre m = 3 en tant que fonction de fenêtre temporelle (w(t)).

6. Procédé suivant l'une des revendications 1 à 5, caractérisé par le fait qu'on transmet des images partielles unidimensionnelles (B) comportant respectivement 8 ou 16 valeurs des signaux.

7. Procédé suivant l'une des revendications précédentes 1—3, caractérisé par le fait qu'on transmet des images partielles multidimensionelles.

8. Procédé suivant l'une des revendications précédentes, caractérisé par le fait qu'on traite séparément des signaux de chrominance et des signaux de luminance.

**Claims**

1. Method for transmitting digitized television images, in which the signal values (X) of partial images (B) are transformed overlapping into spectral values (YT) the coefficients ($m_{hl}$) of which are transmitted and from which the signal values (X) are again determined at the receiving end by inverse transformation, characterized in that, at the transmitting end, the signal values (X = X1 to X64) of several whole partial images (B1 to B4) are weighted by a time window function (wt), in that a spline function ($w_{3/2}$) is used as time window function, in that in each case the weighted signal values of the partial images (B1 to B4) are converted into spectral values (YT) by means of a modified Fourier transformation, the coefficients of

6

which exhibit an integral number of sinusoidal oscillation periods, in that in each case, at a maximum, the same number (N) of spectral values (YT) is transmitted in accordance with the number (N) of the signal values of a partial image (B1, B2, B3, . . .), in that, subsequently at the transmitting end, the signal values of the subsequent partial images (B2 to B5) are processed and transmitted in the same manner, displaced by one partial image (B1), in that, at the receiving end, spectral values which have not been transmitted are determined by interpolation of the transmitted spectral values (YT), in that subsequently an inverse transformation of all spectral values (Y) of the partial images (B1 to B4) transmitted in each case is effected, and in that the image signal values (X*) to be used further are determined by addition of the weighted signal values (XT), obtained by inverse transformation, to the weighted preceding signal values (XT) already transmitted — in accordance with the overlapping processing at the transmitting end.

2. Method according to Claim 1, characterized in that spline functions of the order m 3 are provided as time window function.

3. Method according to Claim 1 or 2, characterized in that the transformation of signal values (X) into spectral values (YT) is effected by discrete Fourier transformation (DFT).

4. Method according to one of the preceding claims, characterized in that in each case the weighted signal values (XB) having the same position within the (m + 1) partial images (B1 to B4) are added to one another for determining the aggregate signal values (XBS) and that in each case N aggregate signal values (XBS) are transformed.

5. Method according to one of the preceding claims, characterized in that a heterogeneous spline function of the order m = 3 is used as time window function (W(t)).

6. Method according to one of Claims 1 to 5, characterized in that one-dimensional partial images (B) having in each case 8 or 16 signal values are transmitted.

7. Method according to one of the preceding claims 1—2, characterized in that multi-dimensional partial images are transmitted.

8. Method according to one of the preceding claims, characterized in that chrominance signals and luminance signals are processed separately.

# FIG 1

# FIG 2

## FIG 3

## FIG 4

## FIG 5

$$w_{3/2}(f-h/T)+w_{3/2}(f+h/T)$$

h=0

0   1/2T   f

h=1

-1/T   0   1/T   f

h=2

-2/T   0   2/T   f

h=N-2

-2/T   0   2/T   f

-1/T   h=N-1

0   1/T   f

## FIG 6

$m_{hi}$   h=0

1
0   N   2N   3N 4N-1 4N   i

1   h=1
0   i

1   h=2
0   i

1   h=N-2
0   i

1   h=N-1
0   i

3

## FIG 7